# EUROPÄISCHE PATENTSCHRIFT

(11) **EP 3 853 506 B1**
(45) Veröffentlichungstag und Bekanntmachung des Hinweises auf die Patenterteilung: **28.09.2022**
(21) Anmeldenummer: 20807302.3
(22) Anmeldetag: 10.11.2020
(51) Int. Cl.: F16K 1/44, F01D 17/14, F16K 1/52, F16K 31/56

(54) **KOMBINATIONSVENTIL AUS SCHNELLSCHLUSS- UND REGELVENTIL FÜR EINEN DAMPFKREISLAUF UND SIL 3 ZERTIFIZIERTER SICHERHEITSKREIS**
COMBINATION VALVE CONSISTING OF QUICK-ACTING VALVE AND CONTROL VALVE FOR A STEAM CIRCUIT AND SIL 3 CERTIFIED SAFETY CIRCUIT
SOUPAPE COMBINÉE CONSTITUÉE D'UNE SOUPAPE À ACTION RAPIDE ET D'UNE SOUPAPE DE COMMANDE POUR UN CIRCUIT DE VAPEUR ET CIRCUIT DE SÉCURITÉ CERTIFIÉ SIL 3

(30) Priorität: 02.12.2019 DE 102019218694
(43) Veröffentlichungstag der Anmeldung: 28.07.2021
(73) Patentinhaber: TURVENTIL GmbH & Co. KG, 90431 Nürnberg (DE)
(72) Erfinder: Mahalek, Michael, 90431 Nürnberg (DE)
(74) Vertreter: Klunker IP Patentanwälte PartG mbB
(86) Internationale Anmeldenummer: PCT/EP2020/081611
(87) Internationale Veröffentlichungsnummer: WO 2021/110375

(56) Entgegenhaltungen:
- CH-A5- 583 371
- DE-A1- 2 710 527
- DE-A1- 2 948 639
- US-B2- 10 480 346

## Beschreibung

Die Erfindung betrifft ein Kombinationsventil aus Schnellschluss- und Regelventil für einen Dampfkreislauf, insbesondere einen Dampfkreislauf einer Dampfturbine.

Zum sicheren Betreiben von Dampfturbinen wird zwischen dem Kessel und der Dampfturbine als Hauptabsperrventil ein meist hydraulisches Schnellschlussventil mit Vorhub eingesetzt, das in Bruchteilen einer Sekunde schließt und das im Betrieb stets voll offen ist und nur geschlossen wird beim gezielten Abstellen der Maschine oder im Störfall wie z.B. bei Lastabwurf und gleichzeitigem Versagen der Regelung. Als Regelventil wird ein Drosselventil eingesetzt, das den Eingangsdruck und die Dampfmenge vor der Beschaufelung der Dampfturbine auf die vorgegebenen Dampfdrücke und Dampfmengen regelt. Die meist verwendeten Regelventile sind nicht druckentlastete Einsitzventile, die wegen ihrer hohen Ventilkräfte mit Hochdruck-Ölanlagen von 100-160 bar betrieben werden. Bei sehr großen Dampfvolumen werden sehr massive und voluminöse Ventile eingesetzt, die ebenfalls mit Hochdruck-Ölanlagen oder mit Mitteldruck-Ölanlagen von 30-50 bar betrieben werden.

Zur Erhöhung des Wirkungsgrades ist es üblich, der Turbine den Dampf über mehrere Beaufschlagungssektoren zuzuführen, üblicherweise zwischen 2 und 6 bis maximal 10 Sektoren. Der Dampfzufluss zu jedem Sektor wird durch ein eigenes Regelventil eingestellt. Mit zunehmender Belastung wird in stetiger Weise ein Regelventil nach dem anderen geöffnet, so dass in einem beliebigen Belastungszustand einige Regelventile voll geöffnet sind und nur eines teilweise geöffnet ist. Drosselverluste entstehen daher nur an diesem einen teilweise geöffneten Regelventil, wodurch sich ein günstiger Gesamtwirkungsgrad ergibt.

Es ist bekannt, das Schnellschlussventil und das Regelventil als Kombinationsventil in einem gemeinsamen Ventilgehäuse zu vereinen. Hierbei weist in der Praxis jedes der beiden Ventile einen eigenen aktiven Antrieb auf. Solche Kombinationsventile weisen die Problematik eines sich über mehrere Meter erstreckenden Ventilaufbaus auf, da die Antriebe für die jeweilige Ventilspindel auf unterschiedlichen Seiten des Gehäuses angeordnet werden müssen. Zudem sind Druckverluste, hohe Ventilkräfte und insbesondere Schwingungen an den Ventilspindeln sowie undichte Ventildichtungen im Betrieb häufig ein Problem. So führen Schwingungen an Ventilspindeln zu Schäden an den Spindeln, Ventilsitzen und Ventilführungen. Dadurch entstehen Dampfleckagen, die zusätzliche Absaugungen notwendig machen. Darüber hinaus können durch Mehrfachumlenkung des Dampfs im Gehäuse Druckverluste entstehen.

Aus DE 27 10 527 A1 und DE 29 48 639 A1 sind Kombinationsventile gemäß dem Oberbegriff des anhängenden Anspruchs 1 bekannt, bei welchen das Schnellschlussventil ständig mit Dampfdruck beaufschlagt wird und welche über Steuerventile druckentlastet und so in Schließstellung gebracht werden können.

Es ist Aufgabe der vorliegenden Erfindung, ein Kombinationsventil für einen Dampfkreislauf, insbesondere für einen Dampfkreislauf einer Dampfturbine, bereit zu stellen, welches bei Überprüfbarkeit der Funktionsfähigkeit des Schnellschlussventils eine kompakte und platzsparende Anordnung und eine günstige strömungstechnische Auslegung ermöglicht.

Diese Aufgabe wird gelöst durch ein Kombinationsventil mit den im Anspruch 1 angegebenen Merkmalen. In davon abhängigen Ansprüchen sind vorteilhafte Ausgestaltungen und Weiterbildungen des Kombinationsventils angegeben.

Dementsprechend umfasst das Kombinationsventil ein Schnellschlussventil und ein Regelventil, die in einem gemeinsamen Gehäuse angeordnet sind, wobei nur das Regelventil durch einen aktiven Antrieb verlagerbar ist. Das Schnellschlussventil ist hingegen passiv durch Dampf des Dampfkreislaufs, insbesondere Frischdampf, verlagerbar.

Es wurde erkannt, dass dies Vorteile bezüglich der Größe des Kombinationsventils bietet. Durch eine solche Antriebsweise der beiden Ventilkomponenten wird nur ein aktiver Antrieb für das Regelventil benötigt. Ein aktiver Antrieb für das Schnellschlussventil ist entbehrlich. Das Kombinationsventil kann somit kleinbauend ausgeführt werden.

Das dampfgesteuerte Schnellschlussventil kann in einfacher Weise durch Anliegen des Dampfes an geeigneten Steuerflächen des Schnellschlussventilkörpers über entsprechende Druckdifferenzen verlagert werden. Hierfür weist das Schnellschlussventil vorzugsweise sowohl auf seiner Vorderseite Steuerflächen auf, durch die ein Öffnen des Schnellschlussventils ermöglicht wird, als auch auf seiner Rückseite Steuerflächen auf, welche beim Schließen des Schnellschlussventils mitwirken.

Dabei ist das dampfgesteuerte Schnellschlussventil vorzugsweise so ausgebildet, dass im geöffneten Zustand des Schnellschlussventils der Dampfdruck nur an den vorderseitigen Steuerflächen anliegt, während die rückseitigen Steuerflächen drucklos sind. Zum Schließen des Schnellschlussventils wird der Dampfdruck beidseitig auf die Steuerflächen aufgebracht. Da die vorderseitigen und rückseitigen Steuerflächen annähernd gleich große Angriffsflächen für den Dampfdruck bieten, ist für den Schließvorgang des Schnellschlussventils eine zusätzliche, vorzugsweise mechanische, Schließkomponente, wie beispielsweise eine Feder eingebaut, welche beim Schließen des Schnellschlussventils zusätzlich auf die rückseitigen Steuerflächen wirkt, um den Schließvorgang des Schnellschlussventils zu ermöglichen. Außerdem kann die mechanische Schließkomponente das Schnellschlussventil bei fehlendem Dampfdruck geschlossen halten.

Die mechanische Schließkomponente ist vorzugsweise so gewählt, dass sie ein Öffnen des Schnellschlussventils nicht behindert, wenn ein ausreichend hoher Dampfdruck an den vorderseitigen Steuerflächen anliegt und die rückseitigen Steuerflächen drucklos sind. Die Schließkraft der Schließkomponente ist dabei so abgestimmt, dass sie kleiner ist als die Kraft an den mit Dampfdruck beaufschlagten vorderen Steuerflächen des geschlossenen Schnellschlussventils. Die Schließkraft der mechanischen Schließkomponente ist kleiner als 75 %, insbesondere kleiner als 50 %, insbesondere kleiner als 25 %, insbesondere kleiner als 10 %, insbesondere kleiner als 5 %, insbesondere kleiner als 1 %, der Kraft des anliegenden Dampfdrucks.

Insbesondere verfügt das Kombinationsventil über eine Steuerkomponente, welche es ermöglicht, den Dampf wahlweise auf die mindestens eine hintere Steuerfläche des Schnellschlussventils zu leiten. Solche Steuerkomponenten, wie beispielsweise Ventile, sind deutlich kleiner als ein aktiver Antrieb und können seitlich oder oberhalb des Ventilgehäuses angeordnet werden. Der aktive Antrieb des Regelventils ist vorzugsweise an genau einer Seite des Gehäuses angebracht.

Diese Kompaktheit des Kombinationsventils erlaubt eine einfache und platzsparende Anordnung des Kombinationsventils im Dampfkreislauf. Ferner kann Platz eingespart werden, da das Kombinationsventil selbst klein gebaut ist.

Die Abdichtung der Ventilspindeln zur Atmosphäre ist bei diesem Kombinationsventil dadurch vorteilhaft gelöst, dass das Schnellschlussventil keine Spindel sondern nur das Regelventil eine Spindel nach außen aufweist und die rückseitigen Steuerflächen des Schnellschlussventils in der Offenstellung des Schnellschlussventils drucklos sind. So kann die Spindeldichtung des Regelventils, welche die Spindel auf einer Seite zur Atmosphäre hin abdichtet, im Betrieb auf der anderen Seite ebenfalls drucklos gehalten werden. Nur wenn der Dampfdruck zur Turbine aufgeschaltet wird, steht die Spindeldichtung des Regelventils kurzzeitig unter statischem Druck, allerdings nur solange bis der Öffnungsvorgang des Schnellschlussventils eingeleitet wird.

Vorzugsweise ist das Schnellschlussventil mit einem hülsenförmigen Schnellschlussventilkörper ausgebildet. Zum einen ermöglicht ein hülsenförmiger Ventilkörper ein sicheres Absperren des Ventils. Zum anderen weist eine solche Ausführungsform eine gleichmäßige frontseitige Angriffsfläche für den Dampf auf. Die Rückseite des hülsenförmigen Schnellschlussventilkörpers ist hierbei vorzugsweise als kreisförmige Fläche ausgestaltet. Zusätzlich erlaubt die hülsenförmige Ausführungsform des Schnellschlussventilkörpers die mögliche Anordnung weiterer Komponenten im Innenraum des Schnellschlussventilkörpers.

So kann vorteilhaft das Regelventil mit einem rohrförmigen Ventilkörper ausgebildet sein und der rohrförmige Ventilkörper des Regelventils auf der Innenseite des hülsenförmigen Schnellschlussventilkörpers geführt werden. Dies erlaubt ein, zumindest teilweises, Anordnen des Regelventils im Innenraum des Schnellschlussventils. Hierdurch benötigen die beiden Ventilkörper zusammen nur geringfügig mehr Platz als ein einzelner Ventilkörper. Ferner ermöglicht die Tatsache, dass sich die beiden beweglichen Ventilkörper in gleicher Richtung weg vom jeweiligen Ventilsitz bewegen, ein freies Ein- und Ausströmen des Dampfes mit geringen Strömungsverlusten.

Vorzugsweise ist das Regelventil als "druckentlastetes Rohrregelventil" ausgeführt. Dies ermöglicht ein druckentlastetes Betätigen des Regelventils. Der rohrförmige Ventilkörper ist ein Rohrstück, besitzt zwei ringförmige Dichtflächen und weist vorzugsweise eine Innenwand auf, an welcher der Spindelschaft, welcher mit dem Antrieb des Regelventils in Verbindung steht, befestigt ist. Zusätzlich weist die Innenwand vorzugsweise Bohrungen für die Druckentlastung des Regelventils auf. Durch die Bohrungen muss beim Verfahren des Regelventils nur einem minimalen Druck entgegengewirkt werden.

Alternativ ist das Regelventil als "Vorhub-Regelventil" ausgeführt, bei welchem zunächst der Vorhub am Regelventil und anschließend der Ventilkörper geöffnet wird.

So wie der rohrförmige Ventilkörper des Regelventils vorteilhaft auf der Innenseite des hülsenförmigen Schnellschlussventilkörpers geführt werden kann, kann der hülsenförmige Ventilkörper des Schnellschlussventils seinerseits vorteilhaft außenseitig in einer Führungshülse geführt werden. Die Führungshülse kann ein separates Bauelement in dem Gehäuse sein, oder das Gehäuse kann selbst innenseitig als Führungshülse für den hülsenförmigen Ventilkörper des Schnellschlussventils ausgebildet sein.

Vorzugsweise erlaubt das Kombinationsventil ein voneinander unabhängiges Schalten und auch Schließen der beiden Komponenten Regelventil und Schnellschlussventil im Sinne zweier unabhängiger redundanter Schließorgane. So kann beispielsweise das Regelventil zunächst geschlossen bleiben und das Schnellschlussventil geöffnet werden. Anschließend kann das Regelventil nach Bedarf geöffnet werden und einen Durchfluss des Dampfes ermöglichen. Dies ermöglicht auch eine gute Regelbarkeit von minimalen Dampfströmen.

Durch die bevorzugte Ausführungsform des Kombinationsventils mit zwei unabhängigen redundanten Schließorganen ist es zudem möglich, die Dampfzufuhr schnell und sicher abzustellen. So muss beispielsweise die Dampfzufuhr durch das Kombinationsventil hindurch zu einer Dampfturbine innerhalb von ca. 0,3 Sekunden vollständig abgesperrt werden, um einen Schutz der Turbine zu gewährleisten. Da beide Ventile diese Schließzeiten erreichen, ist es ausreichend, dass eines der beiden Ventile den Dampfstrom leckagefrei abschließt. Vorzugsweise schließen beide Ventile leckagefrei ab. Insbesondere schließt das Schnellschlussventil leckagefrei ab. Das Regelventil kann über einen Leckagestrom verfügen, wobei der Leckagestrom des Regelventils allerdings vorzugsweise vernachlässigbar klein ist. Insbesondere für den Fall, dass der Turbine der Dampf über mehrere Beaufschlagungssektoren zugeführt wird und dem entsprechend mehrere Kombinationsventile vorgesehen sind, ist der Leckagestrom des Regelventils unproblematisch, da dieser immer nur unmittelbar das zuerst/nachfolgend öffnende Ventil in der Kombinationsventilreihe, insbesondere das Regelventil, betrifft. Die anderen Ventile, insbesondere das Schnellschlussventil, sind zunächst ohnehin geschlossen und somit leckagefrei. Gegenüber dem Stand der Technik weist das Kombinationsventil den Vorteil auf, dass sich mehrere Leckageströme nicht aufsummieren. Dies wird mit dem vorliegenden Kombinationsventil zuverlässig verhindert.

Weiter vorzugsweise ist ein schaltbares Steuerventil zum Schalten des Schnellschlussventils vorgesehen. Hierzu wird insbesondere ein 3/2-Wegeventil verwendet. Das schaltbare Steuerventil dient dazu, den Dampf über ein Leitungssystem auf die Rückseite des Schnellschlussventilkörpers zu leiten. Ein solches Ventil weist die nötigen Schaltzeiten auf, um das Schnellschlussventil in ca. 0,3 Sekunden zu schließen. Ein schaltbares Steuerventil kann außerdem mit relativ kleinen und unaufwändigen Antrieben ausgebildet werden.

Vorzugsweise weist das Steuerventil einen hydraulisch oder pneumatisch ausgeführten Steuerantrieb auf. Dies ermöglicht ein gezieltes Schalten des Kombinationsventils durch den verwendeten Steuerantrieb. Die bevorzugten Antriebsmechanismen des Steuerantriebs sind hierbei so gewählt, dass diese keine aufwändigen Antriebe benötigen, sondern im Vergleich zum Kombinationsventil relativ klein ausgeführt werden können. Dies erlaubt eine Anordnung des Ventils inklusive des Steuerantriebs seitlich oder oberhalb am Kombinationsventil. Die Hydraulik oder Pneumatik ist im Anwendungsbereich eines solchen Kombinationsventils meist bereits vorhanden und kann unmittelbar genutzt werden.

Das Regelventil kann vorteilhaft einen als Niederdruckhydraulik-Antrieb oder als elektrischer Antrieb ausgeführten Regelventilantrieb aufweisen. Dies erlaubt ein gezieltes Steuern des Regelventils. Zudem sind die bevorzugten Antriebsmechanismen einfach auszuführen. Die bevorzugte Bauform des Regelventils als druckentlastetes Rohrregelventil erlaubt es, eine Niederdruckhydraulik im Bereich von 2 bis 18 bar, insbesondere 4 bis 16 bar, insbesondere 6 bis 14 bar, insbesondere 8 bis 12 bar anstelle der üblichen Hochdruckhydraulik von 60 bis 200 bar bei nicht entlasteten Ventilen zu verwenden oder einen elektrischen Antrieb. Der elektrische Antrieb kann bei einem druckentlasteten Regelventil verhältnismäßig klein ausgeführt werden, da nur ein kleines Drehmoment benötigt wird.

Vorteilhaft ist das Gehäuse des Kombinationsventils aus einem Gehäusegrundkörper und einem Gehäusedeckel aufgebaut, wobei der Gehäusegrundkörper mit dem Gehäusedeckel kraftschlüssig und/oder formschlüssig verbindbar ist. Dies ermöglicht eine unkomplizierte Montage der Komponenten und ermöglicht zudem einen relativ unaufwändigen Austausch der verbauten Komponenten. Der Gehäusedeckel ist hierbei vorzugsweise durch Schrauben mit dem Gehäusegrundkörper verbunden. Der Gehäusedeckel umfasst vorzugsweise genau eine Seitenwand des Gehäuses.

Die Antriebe des Schnellschlussventils und des Regelventils sowie das Schnellschlussventil selbst und das Regelventil selbst sind bevorzugt am Gehäusedeckel befestigt bzw. geführt. Dies erlaubt eine einfache Entnahme der Ventile und deren Antriebe durch Abnahme des Deckels, wodurch die Komponenten einfach an einem geeigneteren Ort, wie beispielsweise einer Werkstatt, getauscht werden können. Vorzugsweise können die Antriebe auch bei montiertem Deckel einzeln entnommen werden. Dies ermöglicht einen einfachen und schnellen Austausch defekter Antriebe.

Bei Defekt einer Komponente kann der komplette Deckel inklusive der Ventilmechanismen getauscht werden, ohne eine Demontage der Rohrverbindung zu erfordern. Ein Austausch der Komponenten durch Austausch des gesamten Gehäusedeckels ermöglicht die Verwirklichung von kurzen Stillstandzeiten des Kombinationsventils. Der defekte Gehäusedeckel kann dann repariert oder ausgetauscht werden, während der Dampfkreislauf mit dem ausgetauschten Deckel weiter betrieben werden kann.

Das Gehäuse weist vorzugsweise an einer Dampfeintrittsöffnung ein Dampfsieb auf, das eine Dampfumlenkvorrichtung umfasst. Dies erlaubt eine teilweise Umlenkung des eintretenden Dampfstroms. Der Dampfstrom muss bei einer solchen Ventilart um einen 90° Winkel gelenkt werden, was zu Strömungsverlusten führen kann. Durch das verwendete Dampfsieb wird der eintretende Dampf bereits an der Dampfeintrittsöffnung um einen Winkel von 10° bis 80°, insbesondere 25° bis 65°, insbesondere 30° bis 55°, insbesondere 40° bis 50°, insbesondere 45°, umgelenkt. Diese Teilumlenkung reduziert die im Ventil entstehenden Strömungsverluste durch eine schrittweise Umlenkung des Dampfes.

Das Dampfsieb ermöglicht zudem das Herausfiltern von im Dampfstrom mitgeführten Fremdkörpern. Die Fremdkörper umfassen beispielsweise Schweißperlen oder Ablösungen aus dem Kessel und den Rohrleitungen. Durch das Herausfiltern der mitgeführten Fremdkörper wird eine Beschädigung der Ventilkörper, Ventilflächen und der Turbinenschaufeln durch Aufschlagen der Fremdkörper verhindert. Beschädigungen an den Ventilkörpern und den Ventilflächen können zu ungewollten Leckageströmen führen. Beschädigungen an Turbinenschaufeln können zu einer Minderung des Wirkungsgrads der Turbine führen, was allerdings nicht ein zwangsläufiges Abstellen der Turbine zur Folge hat. Im Extremfall kann es zum Bruch der Schaufeln, zusätzlichen Beschädigungen von Innenteilen der Turbine und sogar zu Schäden am Turbinengehäuse kommen, welche zum Stillstand der Turbine führen und anschließende Reparaturen meist unumgänglich machen.

Das Dampfsieb ist vorzugsweise lösbar mit dem Gehäusedeckel des Gehäuses verbunden. Dies erlaubt ein einfaches Reinigen und Austauschen des Dampfsiebes. Das Dampfsieb kann durch Abnehmen des Deckels zusammen mit diesem entnommen werden. Die Verbindung zwischen Dampfsieb und Deckel, vorzugsweise als Stiftverbindung ausgeführt, kann gelöst werden, und das Dampfsieb kann geprüft, gereinigt und/oder ausgetauscht werden. Dies erlaubt einen einfachen und schnellen Austausch des Dampfsiebs bei Beschädigung oder starker Verschmutzung. Beschädigungen am Dampfsieb können durch im Dampfstrom mitgeführte Fremdkörper oder durch, vom Dampfstrom ausgelöste, Schwingungen verursacht werden.

Ferner kann das Dampfsieb bevorzugt in einer passenden Führung des Gehäusegrundkörpers im montierten Zustand zur Stabilisation aufliegen, um die mechanische Belastung des Dampfsiebs, beispielsweise durch vom Dampf bewirkte Schwingungen, zu minimieren. Die Führungen im Gehäusegrundkörper sind vorzugsweise so ausgestaltet, dass das Dampfsieb durch leichtes Schwingen in den Führungen nicht beschädigt wird. Die Führungen verfügen hierfür vorzugsweise über einen Einsatz, welcher aus einem weichen und damit dämpfenden Material besteht.

Das Gehäuse weist des Weiteren vorteilhaft an einer Dampfaustrittsöffnung einen Diffusor auf. Dies ermöglicht eine weitere Reduzierung der Strömungsverluste im Kombinationsventil. Der Diffusor dient hierbei vorteilhaft als Dichtfläche sowohl für das Schnellschlussventil als auch für das Regelventil. Die Dichtfläche für das Schnellschlussventil liegt radial außen relativ zur Dichtfläche für das Regelventil.

Vorzugsweise weist der Diffusor eine Drallbrechvorrichtung auf, die als Umlenkvorrichtung für den Dampfstrom wirkt und Verwirbelungen im Dampfstrom auflöst. Die Drallbrechvorrichtung besteht hierbei aus zwei bis zwölf, insbesondere vier bis acht, insbesondere fünf bis sieben, insbesondere sechs Drallbrechzähnen. Die Drallbrechzähne befinden sich an der Eingangsseite des Diffusors und erstrecken sich in den Innenraum des Strömungskanals hinein. So können sie Verwirbelungen des Dampfstroms verhindern oder auflösen.

Besonders bevorzugt befinden sich die Drallbrechzähne der Drallbrechvorrichtung zwischen dem Dichtsitz des Schnellschlussventils und dem Dichtsitz des Regelventils. So kann die Drallbrechvorrichtung eine Führung für das Regelventil bilden. Das heißt, im Endbereich des Hubs des Regelventils, kurz bevor das Regelventil den Dichtsitz am Diffusor erreicht, greift die Führung der Drallbrechvorrichtung. Vorzugsweise greift die Führung der Drallbrechvorrichtung etwa bis zum ersten Drittel des Hubs ein, wenn das Regelventil den Dichtsitz am Diffusor verlässt, und genauso beim Schließen, bevor im letzten Drittel das Regelventil den Dichtsitz erreicht. Dadurch können die Schwingungen am Regelventil in diesem Bereich auf ein Minimum reduziert werden. Gerade beim Öffnen des Regelventils sind diese Schwingungen am stärksten.

Der Diffusor ist vorteilhaft lösbar im Gehäusegrundkörper des Gehäuses angeordnet. Dies erlaubt einen einfachen Wechsel des Diffusors im Falle einer Wartung des Ventils oder einer Beschädigung des Diffusors, beispielsweise an den Dichtflächen. Der Diffusor kann hierbei beispielsweise in den Gehäusegrundkörper eingeschraubt sein oder eingesteckt und mittels einer Stift- oder Schraubenverbindung befestigt werden.

Wie bereits erwähnt, dient der Diffusor als Dichtfläche für das Regel- und für das Schnellschlussventil. Da diese Flächen durch die schnellen Schließvorgänge beschädigt werden können, ist eine einfache Austauschbarkeit des Diffusors nützlich und kann so Wartungsaufwand minimieren.

Der Diffusor kann hierbei zur einfacheren und besseren Prüfung auf Abnutzungen und/oder Beschädigungen außerhalb des Gehäuses geprüft werden. Eine Prüfung im ausgebauten Zustand erlaubt zum einen eine verbesserte Sichtprüfung aller Bereiche des Diffusors. Zum anderen erlaubt eine Prüfung im ausgebauten Zustand die Prüfung des Diffusors mit anderen Prüfmitteln, wie beispielsweise verschiedenen Arten der Durchstrahlungsprüfung oder Oberflächeninspektion.

Es kommt häufig vor, dass ein Dampfkreislauf über Monate oder Jahre läuft, ohne dass das Schnellschlussventil geschlossen werden muss. Von besonderer Bedeutung für einen Dampfkreislauf ist daher der Nachweis, dass sich das Schnellschlussventil auch tatsächlich bewegt, wenn es plötzlich benötigt wird, und nicht etwa festsitzt. Entsprechende Tests werden im laufenden Betrieb durchgeführt und dürfen den Betrieb nicht beeinträchtigen. Dies ist in Systemen, die zwei redundante, parallel angeordnete Schnellschlussventile aufweisen, nicht schwierig, weil dann jedes Schnellschlussventil einzeln testweise geschlossen werden kann, während das andere offen ist und eine Dampfströmung garantiert. Ist aber nur ein Schnellschlussventil vorgesehen, weil etwa die Redundanz wie im vorliegenden Kombinationsventil durch das Regelventil gewährleistet wird, werden sogenannte Teilhubtests an dem Schnellschlussventil durchgeführt, die sich dadurch auszeichnen, dass das Schnellschlussventil nur über einen Teil seines Hubs bewegt wird, ohne dass dies den laufenden, angepassten und reduzierten Betrieb des Dampfkreislaufs beeinflusst. Die amerikanische Norm API 612 normt diesen Test. Bei dem vorliegenden Kombinationsventil beträgt der Hubbereich des Schnellschlussventils im Teilhubtest vorzugsweise 15% - 20% des Vollhubs.

Dazu ist das Schnellschlussventil über eine separate Absperrleitung derart mit Frischdampf beaufschlagbar, dass es sich während des laufenden Betriebs des Dampfkreislaufs - unterstützt etwa durch Federkraft der mechanischen Schließkomponente - in seine Schließrichtung bewegt. Durch die Verlagerung des Schnellschlussventils in Schließrichtung öffnet sich eine Drosselstelle, über die der Frischdampf wieder entweichen kann, so dass das Schnellschlussventil an einer weiteren Bewegung in Schließrichtung gehindert wird und stattdessen in einer Teilhubstellung verharrt. Der erfolgreiche Teilhubtest wird über zwei in Strömungsrichtung vor und hinter der Drosselstelle angeordnete Drucktransmitter überprüft. Die beiden Drucktransmitter bestätigen, wann sich der jeweils angezeigte Druck auf einen gemeinsamen Mitteldruck irgendwo zwischen dem Druck in der Dampfeintrittsöffnung und dem Umgebungsdruck einpegelt hat.

Wesentlich aussagekräftiger ist natürlich ein Vollhubtest, weil er auch über die Sperrfähigkeit des Ventils Aufschluss gibt. Weil der Turbine der Dampf zumeist über mehrere Beaufschlagungssektoren zugeführt wird und somit mehrere Kombinationsventile vorgesehen sind, kann der Teilhubtest des Schnellschlussventils vorteilhaft durch einen gemeinsamen Vollhubtest des Schnellschlussventils und des Regelventils des jeweiligen Kombinationsventils ersetzt werden. Dazu wird zunächst die Turbinenleistung im Dampfkreislauf reduziert, indem sie den restlichen geöffneten Ventilen angepasst wird, sodass anschließend die Kombinationsventile eines nach dem anderen den Vollhubtest ausführen und somit ihre Tauglichkeit zum noch sichereren Abstellen und Absperren der Turbine unter Beweis stellen können.

Das vorliegend offenbarte Kombinationsventil bietet den besonderen Vorteil, dass es in gemäß IEC/EN 61511/61508 als "SIL 3" zertifizierten Sicherheitskreisen verwendbar ist. "SIL" steht für "safety integrity level" und spezifiziert die Anforderungen an die Zuverlässigkeit von Sicherheitsfunktionen elektrischer und/oder elektronischer und/oder programmierbarer elektronischer Systeme in vier Sicherheitsstufen. SIL bedeutet die Reduzierung von Gefahren für Mensch, Umwelt und Sachwerte auf ein vertretbares Maß. So kann ein Sicherheitskreis, bei dem beispielsweise nur ein Schnellschlussventil in einem Dampfkreislauf vorgesehen ist, nicht über SIL 2 hinauskommen. Für SIL 3 bedürfte es zumindest der Redundanz des Schnellschlussventils, d.h. es müsste z.B. noch ein zweites vor- oder nachgeschaltetes Schnellschlussventil vorgesehen werden, damit im Falle des Ausfalls eines Ventils wenigstens noch das andere Ventil schließen kann. Bei zwei gleichartigen Absperrventilen spricht man von homogener Redundanz. Wenn die beiden Absperrventile von unterschiedlicher Art sind, d.h. wenn ein systemischer Fehler nicht zum gleichzeitigen Ausfall beider Ventile führen kann, spricht man von diversitärer Redundanz. Beispielsweise können ein Schnellschlussventil, welches wie das vorliegende dampfgesteuert ist, und ein Regelventil, welches einerseits geeignet ist, den Durchfluss vollständig zu sperren, und andererseits z.B. elektrisch betätigt wird, gemeinsam ein Sicherheitssystem SIL 3-fähig machen. Das vorliegende Kombinationsventil kombiniert ein solches Schnellschlussventil und ein solches Regelventil in einem gemeinsamen Gehäuse, und die Tatsache, dass beide Ventile unabhängig voneinander öffnen und schließen können, qualifiziert das Kombinationsventil als SIL 3-fähig mit diversitärer Redundanz. Dadurch kann dieses Kombinationsventil bei SIL 3 Anforderungen in Sicherheitskreisen die klassischen Schnellschlussventile ersetzen. Es bietet den besonderen Vorteil, dass es einerseits klein baut, weil beide Ventile in einem Gehäuse kombiniert sind, und andererseits den Teilhubtest ermöglicht, welcher wegen der Norm API 612 ebenfalls eine Pflichtvorgabe ist. Beide Eigenschaften in Kombination in einem Ventil und zusätzlich noch die SIL 3-Fähigkeit bedeuten einen besonderen technischen Fortschritt.

Sowohl die in den Patentansprüchen angegebenen Merkmale als auch die in den nachfolgenden Ausführungsbeispielen des Kombinationsventils angegebenen Merkmale sind jeweils für sich alleine oder in Kombination miteinander geeignet, den Gegenstand weiterzubilden. Die jeweiligen Merkmalskombinationen stellen hinsichtlich der Weiterbildungen des Kombinationsventils keine Einschränkung dar, sondern weisen im Wesentlichen lediglich beispielhaften Charakter auf.

Weitere Ausführungsbeispiele werden nachfolgend anhand der Zeichnungen näher erläutert. In dieser zeigen:
- Fig. 1: eine Schnittdarstellung eines ersten Ausführungsbeispiels des Kombinationsventils mit Schnellschlussventil und Regelventil im geschlossenen Zustand,
- Fig. 2: eine Fig. 1 entsprechende Schnittdarstellung des Kombinationsventils mit Schnellschlussventil im geöffneten Zustand und Regelventil im geschlossenen Zustand,
- Fig. 3: eine Fig.1 entsprechende Schnittdarstellung des Kombinationsventils mit Schnellschlussventil und Regelventil im geöffneten Zustand,
- Fig. 4: eine Fig.1 entsprechende Schnittdarstellung des Kombinationsventils mit Regelventil im geöffneten Zustand und Schnellschlussventil im Teilhubtest,
- Fig. 5: eine Frontansicht des Diffusors,
- Fig.6: eine Schnittdarstellung eines zweiten Ausführungsbeispiels des Kombinationsventils mit Schnellschlussventil und Regelventil im geschlossenen Zustand,
- Fig. 7: eine Seitenansicht der auf dem Spindelschaft des Regelventil sitzenden Federhülse mit Axialnut und des dazugehörigen Spanners.

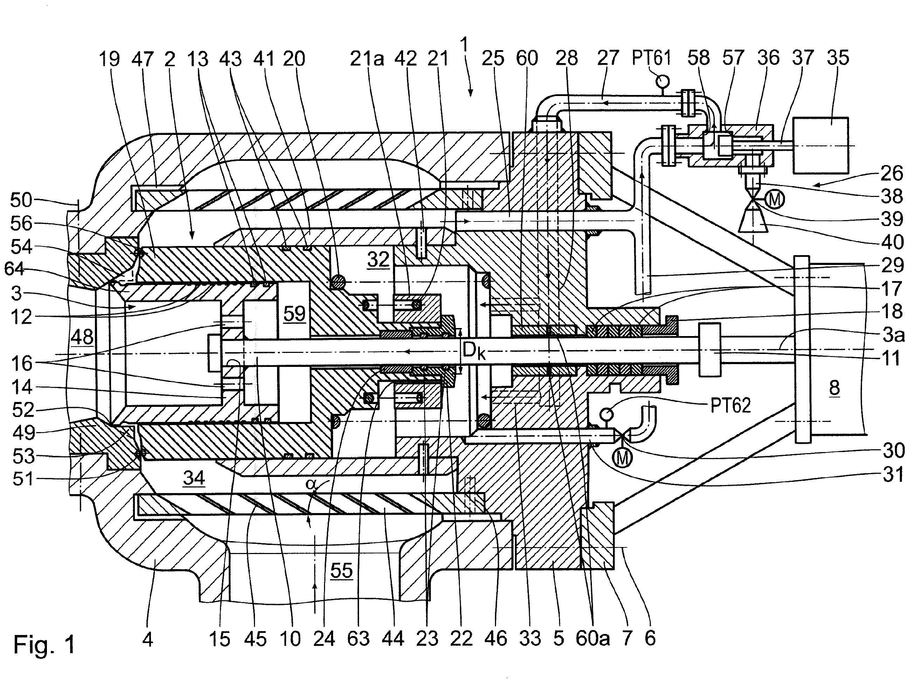

Fig. 1 zeigt ein Kombinationsventil 1 mit einem Schnellschlussventil 2 und einem Regelventil 3 in geschlossenem Zustand. Das Schnellschlussventil 2 und das Regelventil 3 sind koaxial entlang einer Längsachse 3a angeordnet. Das Kombinationsventil 1 umfasst einen Gehäusegrundkörper 4 mit einer Hülse 60 und einen Gehäusedeckel 5. Die Hülse 60 ist in dem Gehäusedeckel 5 eingesetzt und axial daran abgestützt. Der Gehäusegrundkörper 4 und der Gehäusedeckel 5 sind mit einer Schraubverbindung 6 miteinander verbunden. Die Schraubverbindung 6 verbindet außerdem einen Ventilaufsatz 7 und den Gehäusedeckel 5 mit dem Gehäusegrundkörper 4. Am Ventilaufsatz 7 ist ein Regelventilantrieb 8 angeschraubt. Alternativ kann der Ventilaufsatz 7 auch mit einer Stiftverbindung mit dem Regelventilantrieb 8 verbunden sein, mit diesem verschweißt sein oder mit einer formschlüssigen Verbindung verbunden sein.

Das Regelventil 3 ist als druckentlastetes Rohrregelventil ausgeführt und umfasst einen rohrförmigen Ventilkörper 64, einen Spindelschaft 10 und den Regelventilantrieb 8. Der Regelventilantrieb 8 ist mit einer Spindelkupplung 11 mit dem Spindelschaft 10 verbunden. Der rohrförmige Ventilkörper 64 umfasst an seiner Außenseite eine Labyrinthdichtung 12 und Dichtringe 13. Der rohrförmige Ventilkörper 64 umfasst zudem eine Innenwand 14 welche zentrisch eine Spindelschaftbohrung 15 aufweist und kreisförmig um diese Druckentlastungsbohrungen 16. Die Anzahl der Druckentlastungsbohrungen 16 ist hierbei so ausgelegt, dass diese eine ausreichende Druckströmungsfläche ergeben, damit das Regelventil 3 beim Schließen nur einer minimalen Druckdifferenz entgegenwirken muss. Vorzugsweise werden vier, sechs oder acht Druckentlastungsbohrungen 16 verwendet. Eine größere oder kleinere Anzahl der Druckentlastungsbohrungen 16 ist abhängig vom Durchmesser der Druckentlastungsbohrungen 16 möglich.

Der Spindelschaft 10 ist durch die Spindelschaftbohrung 15 geführt und mit der Innenwand 14 verschweißt. Der Spindelschaft 10 ist durch die Spindeldichtung 17 geführt. Die Spindeldichtung 17 ist im Gehäusedeckel 5 angeordnet und wird durch einen Spanner 18 axial entlang der Längsachse 3a fixiert.

Der Innendurchmesser der Hülse 60 ist größer als der Außendurchmesser des Spindelschafts 10. Zwischen dem Spindelschaft 10 und der Hülse 60 wird ein ringförmiger Zwischenraum, insbesondere eine Spaltfläche gebildet, so dass hierüber ein Druckausgleich möglich ist.

Das Schnellschlussventil 2 umfasst einen Schnellschlussventilkörper 19, eine erste zylindrische Druckfeder 20, eine zweite zylindrische Druckfeder 21, eine Federhülse 21a mit einer Axialnut 63, eine Buchse 24 und einen Spanner 22. Die Buchse 24 ist formschlüssig mit dem Schnellschlussventilkörper 19 verbunden und dient als Führung auf dem Spindelschaft 10 des Regelventils 3.

Der Spanner 22 ist mit selbstblockierendem Feingewinde im Schnellschlussventilkörper 19 nach einem einzustellenden Längsmaß verschraubt, wobei der Spanner 22 an der Kante des Schnellschlussventilkörpers 19 anliegt und zur Buchse 24 hin ein Spiel von beispielsweise 0,2 mm aufweist. Der Spanner 22 hat einen Sechskantkopf und kann zusätzlich noch mit einem Stift gesichert werden. Außerdem ist der Spanner 22 noch mit Dichtringen 23 ausgestattet, die den Innenraum 59 zum Federraum 32 in beiden Richtungen über den beweglichen Spindelschaft 10 abdichten.

Das Schnellschlussventil 2 umfasst einen Frischdampfkanal 25, ein Steuerventil 26, eine Steuerleitung 27, eine Kammer 28, eine Absperrleitung 29 sowie ein Absperrventil 30. Das Absperrventil 30 ist über eine Bohrung 31 mit einem Federraum 32 verbunden. Der Federraum 32 ist über acht Bohrungen 33 mit der Kammer 28 verbunden. Die Anzahl der Bohrungen 33 ist nicht auf acht begrenzt. Die Anzahl und der Durchmesser der Bohrungen 33 sind bei der Auslegung so zu wählen, dass die Gesamtfläche aller Bohrungen 33 der Fläche des Frischdampfkanals 25 entspricht.

Der ringförmige Zwischenraum zwischen dem Spindelschaft 10 und der Hülse 60 ist über mindestens eine, insbesondere mehrere, Radialbohrungen 60a mit der Kammer 28 verbunden. Über den ringförmigen Zwischenraum und die Radialbohrungen 60a kann sich Dampfdruck aus dem Federraum abbauen, sobald beim Öffnen des Schnellschlussventils 2 der Spanner 22 die Dämpfungszone erreicht.

Die Dampfkammer 34 ist über den Frischdampfkanal 25 mit dem Steuerventil 26 verbunden. Bei deaktiviertem Steuerventil 26 ist der Frischdampfkanal 25 mit der Steuerleitung 27 verbunden. Die Steuerleitung 27 mündet in der Kammer 28, welche über die Bohrungen 33 mit dem Federraum 32 verbunden sind. Folglich kann bei deaktiviertem Steuerventil 26 der Frischdampf durch den Frischdampfkanal 25, die Steuerleitung 27, die Kammer 28 und die Bohrungen 33 in den Federraum 32 eintreten und das Schnellschlussventil in der Stellung "geschlossen" halten.

Das Steuerventil 26 umfasst einen Steuerantrieb 35 und ein 3/2-Wegeventil 36, welches einen Ventilkörper 37, der insbesondere als Ventilkegel ausgeführt ist, umfasst. Ferner umfasst das Steuerventil 26 einen Kanal 38, welcher mit einem Absperrventil 39 mit der Leckdampfleitung 40 verbunden ist. Ausgehend vom Aktivierungszustand des Steuerventils 26 ist die Steuerleitung 27 mit dem Frischdampfkanal 25 oder dem Kanal 38 fluidverbunden.

Das Kombinationsventil 1 umfasst eine mit dem Gehäusedeckel 5 verbundene Führungshülse 41, wobei die Führungshülse 41 mit einer Stiftverbindung 42 mit dem Gehäusedeckel verbunden ist. Die Führungshülse 41 dient der Führung des Schnellschlussventilkörpers 19. Zwischen der Führungshülse 41 und dem Schnellschlussventilkörper 19 sind Dichtringe 43 angeordnet, welche die Dampfkammer 34 zum Federraum 32 hin abdichten.

Das Kombinationsventil 1 umfasst ein Dampfsieb 44 mit einer Dampfsiebumlenkung 45. Das Dampfsieb 44 ist über eine Stiftverbindung 46 mit dem Gehäusedeckel 5 verbunden. Ferner liegt das Dampfsieb 44 in einer Aussparung 47 im Gehäusegrundkörper 4 an.

Im Gehäusegrundkörper 4 ist außerdem an einer Dampfaustrittsöffnung 48 ein Diffusor 49 angeordnet. Der Diffusor 49 ist über einen Haltestift 50 mit dem Gehäusegrundkörper 4 verbunden.

Der Diffusor 49 weist eine erste Dichtfläche 51 und eine zweite Dichtfläche 52 auf. Die erste Dichtfläche 51 dient als Ventilsitz für das Schnellschlussventil. Die zweite Dichtfläche 52 dient als Ventilsitz für das Regelventil 3. Der Diffusor 49 weist außerdem eine Drallbrechvorrichtung 53 auf. Die Drallbrechvorrichtung 53 weist hierbei sechs Drallbrechzähne 54 auf, welche gleichmäßig über den Umfang des Diffusors 49 verteilt sind.

Nachfolgend wird die Funktion des Kombinationsventils 1 anhand verschiedener Schaltzustände erläutert.

In Fig. 1 tritt der Dampf durch eine Dampfeintrittsöffnung 55 in das Kombinationsventil 1 ein. Der Dampf liegt dann an einer Steuerkante 56 des Schnellschlussventils 2 an. Zudem liegt der Dampf geführt durch den Frischdampfkanal 25, die Steuerleitung 27, die Kammer 28 und die Bohrung 33 an der Rückseite des Schnellschlussventilkörpers 19 an. Da die Rückseite des Schnellschlussventilkörpers 19 eine größere Steuerläche aufweist als die Steuerkante 56 bleibt das Schnellschlussventil 2 durch die resultierende Kraftdifferenz geschlossen.

Das Regelventil 3 befindet sich im geschlossenen Zustand. Der Dampf wird durch die erste Dichtfläche 51 und die zweite Dichtfläche 52 daran gehindert, in die Dampfaustrittsöffnung 48 einzutreten.

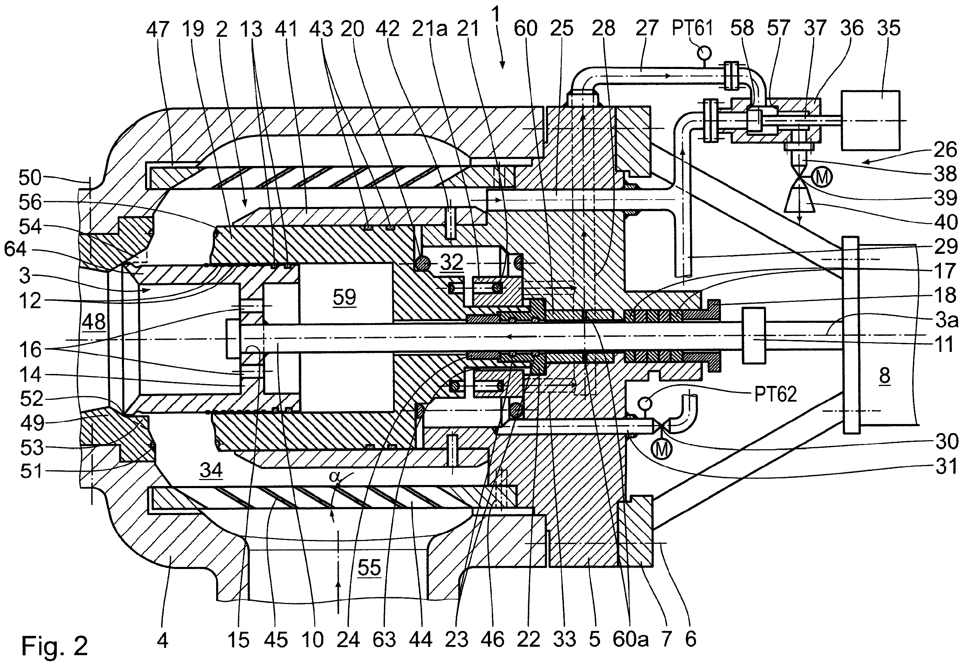

Fig. 2 zeigt das Kombinationsventil 1 mit geschlossenem Regelventil 3 und geöffnetem Schnellschlussventil 2. Hierfür wurde der Ventilkörper 37 des Steuerventils 26 von einer ersten Endstellung 57 in eine zweiten Endstellung 58 verfahren. Der Ventilkörper 37 dichtet somit den Frischdampfkanal 25 ab und gibt den Kanal 38 frei, der vorerst aber noch zur Leckdampfleitung 40 hin, durch das Absperrventil 39 verschlossen ist. Das Absperrventil 39 wird langsam über eine Rampe geöffnet und der Dampf aus dem Federraum 32 kann durch die Bohrungen 33, die Kammer 28, die Steuerleitung 27, das 3/2 Wegeventil 36 und den Kanal 38 über die Leckdampfleitung 40 entweichen.

Das Schnellschlussventil 2 wird durch den an der Steuerkante 56 des Schnellschlussventils 2 anliegenden Dampfdruck leicht angehoben und sobald die komplette Vorderseite des Schnellschlussventilkörpers 19 mit Druck beaufschlagt ist, nach hinten in den Federraum 32 verfahren und geöffnet. Das Schnellschlussventil 2 wird so weit nach hinten verfahren, bis die Federhülse 21a, unterstützt durch die Federkraft der zylindrischen Druckfeder 21, die Bohrungen 33 abdeckt und so den Dampfstrom zur Leckdampfleitung 40 unterbricht.

Das Schnellschlussventil 2 hat jetzt die Dämpfungszone erreicht und der im Federraum 32 eingeschlossene Druck baut sich anschließend nur noch langsam über die Spalte ab, bis der Spanner 22 mit seinem Kontaktdurchmesser Dₖ auf der Hülse 60 anliegt und den Federraum 32 abdichtet. Der Öffnungsvorgang des Schnellschlussventils ist nun beendet und wird durch Druckmessungen PT61 in der Steuerleitung 27 und PT62 im Federraum 32 bestätigt, die beide Umgebungsdruck anzeigen.

Das Regelventil 3 verhindert über die zweite Dichtfläche 52 weiterhin, dass Frischdampf in die Dampfaustrittsöffnung 48 eintritt. Je nach Ausführungsform des Regelventils 3 und des Diffusors 49 dichtet das Regelventil 3 über die zweite Dichtfläche 52 vollständig ab oder erlaubt einen gewissen Leckagedampfstrom.

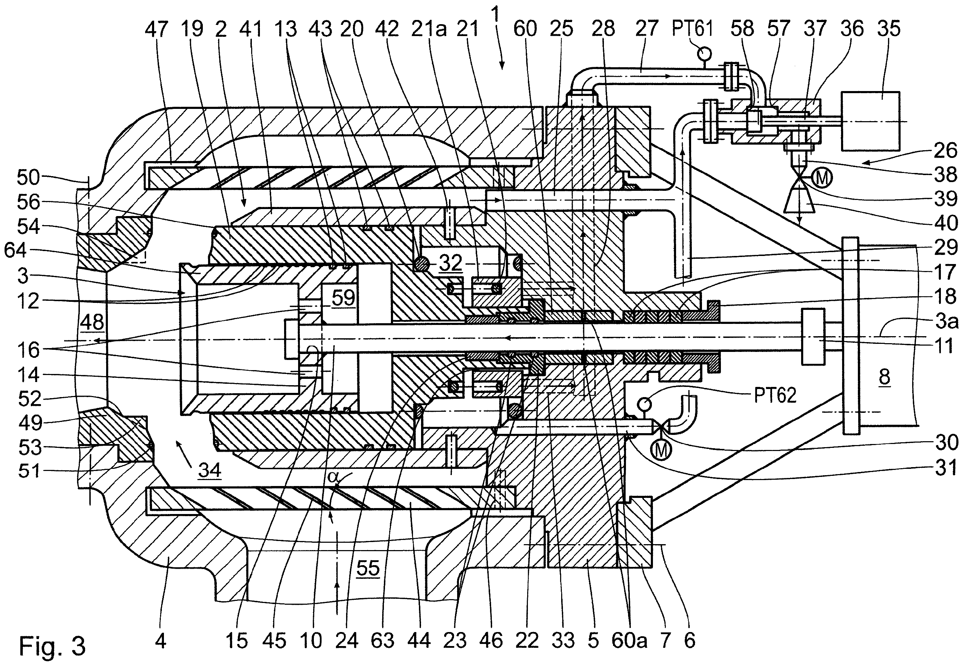

Fig. 3 zeigt das Kombinationsventil mit geöffnetem Schnellschlussventil 2 und geöffnetem Regelventil 3. Der Frischdampf wird hierbei von der Dampfeintrittsöffnung 55 durch das Dampfsieb 44 geleitet. Die Dampfsiebumlenkung 45 des Dampfsiebs 44 lenkt hierbei den Dampfstrom um einen Winkel α = 45° Richtung Dampfaustrittsöffnung 48 ab.

Die Dampfsiebumlenkung 45 minimiert die Strömungsverluste des Dampfstroms, welche bei zu starker Umlenkung auftreten. Der Dampfstrom fließt über die Dampfkammer 34 Richtung Dampfaustrittsöffnung 48. Die Drallbrechzähne 54 der Drallbrechvorrichtung 53 im Diffusor 49 verhindern dabei Verwirbelungen des Dampfstroms und vermindern somit zusätzlich die Strömungsverluste des Dampfes. Außerdem reduziert die zusätzliche Führung des Regelventils 3 in der Drallbrechvorrichtung 53 die auftretenden Schwingungen.

Das Kombinationsventil 1 nach Fig. 3 mit geöffnetem Schnellschlussventil 2 und geöffnetem Regelventil 3 muss zum Schutz oder zum Abstellen der Turbine die Dampfzufuhr innerhalb kürzester Zeit, insbesondere ca. 0,3 s, vollständig absperren. Dazu wird der Steuerantrieb 35 mittels Schnellschließbefehl deaktiviert und der Ventilkörper 37 von seiner zweiten Endstellung 58 in die erste Endstellung 57 verfahren, wie in Fig. 1 gezeigt. Dadurch dichtet der Ventilkörper 37 den Kanal 38 ab und gibt den Frischdampfkanal 25 frei, so dass der Dampf über das 3/2 Wegeventil 36 in die Steuerleitung 27 und die Kammer 28 bis in die Bohrungen 33 gelangt.

Da der Federraum 32 zunächst drucklos ist, verschiebt die in den Bohrungen 33 anstehende Dampfkraft die Federhülse 21a gegen die wesentlich kleinere Federkraft der zylindrischen Druckfeder 21 in Schließrichtung und öffnet dadurch den Zustrom in den Federraum 32. Gleichzeitig wird die komplette Rückseite des Schnellschlussventilkörpers 19 bis zum Kontaktdurchmesser des Spanners 22 auf der Hülse 60 mit Druck beaufschlagt.

Die auf die Rückseite des Schnellschlussventilkörpers 19 wirkende Dampfimpulskraft und Dampfdruckkraft gemeinsam mit der mechanischen Schließkraft der zylindrischen Druckfeder 20 führen dazu, dass der Spanner 22 von der Hülse 60 abhebt, wodurch die Dampfdrücke auf der Vorderseite und der Rückseite des Schnellschlussventilkörpers 19 jetzt ausgeglichen sind, so dass der schnelle Schließvorgang am Schnellschlussventil 2 durch Verschieben entlang der Längsachse 3a erfolgt. Das Schnellschlussventil 2 hat jetzt wieder seine Ausgangsstellung gemäß Fig. 1 erreicht, dichtet über die Dichtfläche 51 am Diffusor 49 ab und versperrt den weiteren Dampfzustrom zur Turbine. Der Schließvorgang ist beendet und wird durch die beiden Druckmessungen PT61 und PT62 bestätigt, welche beide den Dampfdruck in der Dampfeintrittsöffnung 55 anzeigen.

Das Regelventil 3 erhält, als redundante Ausführung zum Schnellschlussventil 2, ebenfalls den Schnellschließbefehl, und der Antrieb 8 verschiebt über die Spindelkupplung 11 und den Spindelschaft 10, das Regelventil 3 entlang der Längsachse 3a bis es geschlossen ist und den Diffusor 49 über die Dichtfläche 52 abdichtet, so dass jeglicher Dampfzustrom zur Turbine sicher verhindert wird. Da beide Ventile, das Schnellschlussventil 2 und das Regelventil 3, nun geschlossen sind, ist auch die Ausgangsstellung nach Fig. 1 wieder erreicht.

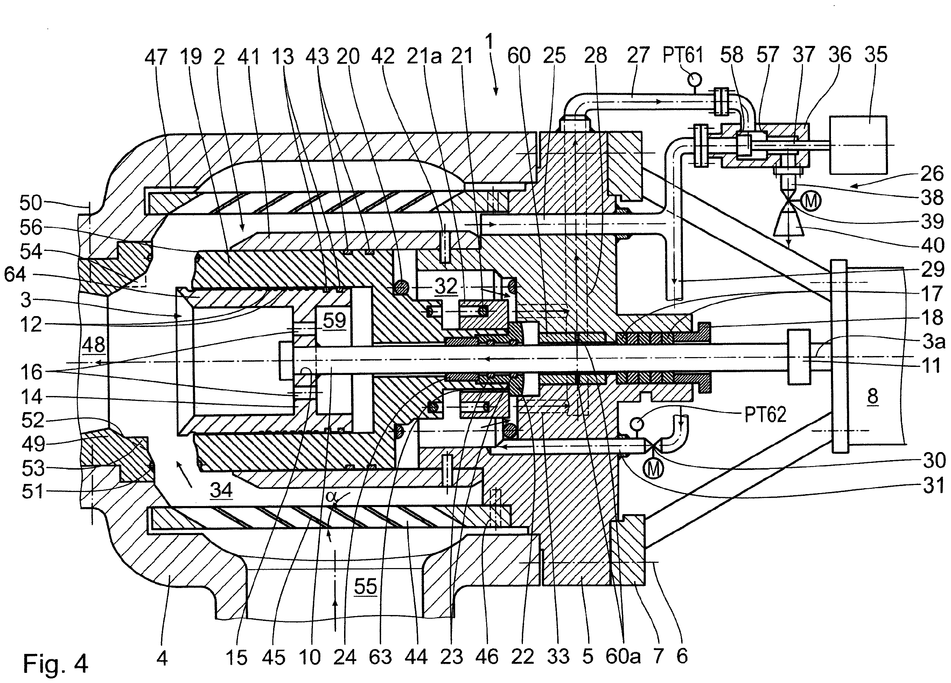

Fig. 4 zeigt das Kombinationsventil 1 mit geöffnetem Regelventil 3 und Schnellschlussventil 2 im Teilhubtest. Für den Teilhubtest wird das Absperrventil 30 im laufenden Betrieb, das heißt bei geöffnetem Regelventil 3, über eine Rampe langsam geöffnet. Der Frischdampf und der Frischdampfdruck können nun ausgehend von der in Fig. 3 gezeigten Stellung über den Frischdampfkanal 25, die Absperrleitung 29, das Absperrventil 30 und die Bohrung 31 in den Federraum 32 gelangen und weiter über die Axialnut 63 der Federhülse 21a bis zum Kontaktdurchmesser Dₖ des Spanners 22, der auf der Hülse 60 aufliegt, was zur Folge hat, dass das geöffnete Schnellschlussvcntil 2 aufgrund des rückseitig wirkenden Frischdampfdrucks insgesamt eine Kraftkomponente in Schließrichtung aufweist. Zusammen mit den in Schließrichtung des Schnellschlussventils wirkenden Federkräften der mechanischen Schließkomponenten 20 und 21 überwindet das Schnellschlussventil 2 die auf die komplette Vorderseite des Schnellschlussventilkörpers 19 wirkenden Dampfdruckkräfte und kann so seine Position in Schließrichtung verlassen. Die mechanische Schließkomponente 20 ist so ausgelegt, dass sie nicht nur die Dampfdruckkräftedifferenz zwischen der Vorderseite und der Rückseite des Schnellschlussventilkörpers 19 überwinden kann, sondern zusätzlich noch eine ausreichende Schließkraft von etwa dreimal der Masse des Schnellschlussventilkörpers 19 aufweist.

Der bis zum Kontaktdurchmesser Dₖ des Spanners 22 anstehende Dampf, unterstützt durch die Schließkraft der mechanischen Schließkomponenten 20 und 21, verschiebt somit das Schnellschlussventil 2 in der Längsachse 3a in Richtung seiner geschlossenen Stellung. Dabei hebt der Spanner 22 von der Hülse 60 ab. Die Federhülse 21a, unterstützt durch die Federkraft der zylindrischen Druckfeder 21, dichtet zunächst weiterhin die Bohrungen 33 ab, und über die Axialnut 63 wird der Spanner 22 jetzt ebenfalls komplett mit Druck beaufschlagt.

Nach einem definierten und einstellbaren Hub schlägt der Spanner 22 an der Federhülse 21a an und verschiebt diese koaxial zur Längsachse 3a. Dadurch sind die Bohrungen 33 nicht mehr durch die Federhülse 21a abgedeckt, so dass der Dampf durch die Bohrungen 33, die Kammer 28, die Steuerleitung 27, das 3/2 Wegeventil 36 und den Kanal 38 in die Leckdampfleitung 40 entweichen kann. Es stellt sich so ein Kräftegleichgewicht und ein statischer Druck in der Federkammer 32 ein, welcher das Schnellschlussventil in die Teilhubteststellung von etwa 15 % bis 20 % des Vollhubs verlagert und dort hält.

Der erfolgreiche Teilhubtest wird über die beiden in Strömungsrichtung vor und hinter der Drosselstelle angeordneten Drucktransmitter PT61 und PT62 überprüft und bestätigt, indem sich der jeweils angezeigte Druck auf einen gemeinsamen Mitteldruck irgendwo zwischen dem Dampfdruck in der Dampfeintrittsöffnung 55 und dem Umgebungsdruck einpegelt. Danach wird das Absperrventil 30 wieder geschlossen. Der Druck aus dem Federraum 32 baut sich anschließend über die Bohrungen 33, die Kammer 28, die Steuerleitung 27, das 3/2 Wegeventil 36 und den Kanal 38 in die Leckdampfleitung 40 ab. Gleichzeitig schiebt der Dampfdruck auf der kompletten Vorderseite des Schnellschlussventilkörpers 19 das Schnellschlussventil 2 nach hinten in den Federraum 32 bis die Federhülse 21a die Bohrungen 33 abdeckt und den Dampfstrom zur Leckdampfleitung 40 unterbricht.

Genau wie beim Öffnungsprozess des Schnellschlussventils 2 ist jetzt auch hier die Dämpfungszone erreicht, und der im Federraum 32 eingeschlossene Druck baut sich anschließend nur noch langsam über die Spalte ab, bis der Spanner 22 mit seinem Kontaktdurchmesser Dₖ auf der Hülse 60 anliegt und den Federraum 32 abdichtet. Das Schnellschlussventil 2 hat jetzt wieder die Endlage "offen" erreicht.

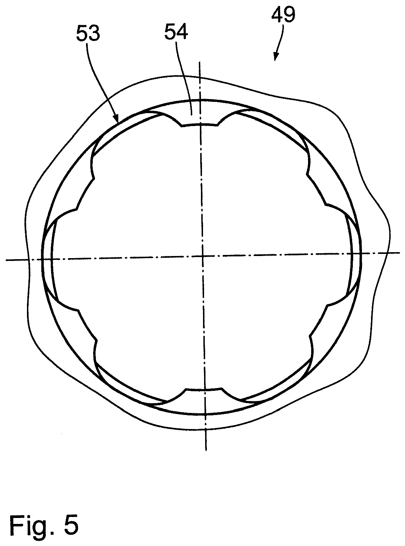

Fig. 5 zeigt eine Frontansicht des Diffusors 49. Die Drallbrechzähne 54 verhindern hierbei durch ihre gleichmäßige Anordnung und ihre Form die Wirbelbildung des Dampfstroms beim Dampfeintritt in den Diffusor 49. Der Dampfstrom wird dabei von den Drallbrechzähnen 54 am Rand des Diffusors 49 geteilt. Diese Teilströme können dadurch keine großen Dampfwirbel bilden und fügen sich nach den Drallbrechzähnen 54 wieder zu einem gerichteten Dampfstrom zusammen.

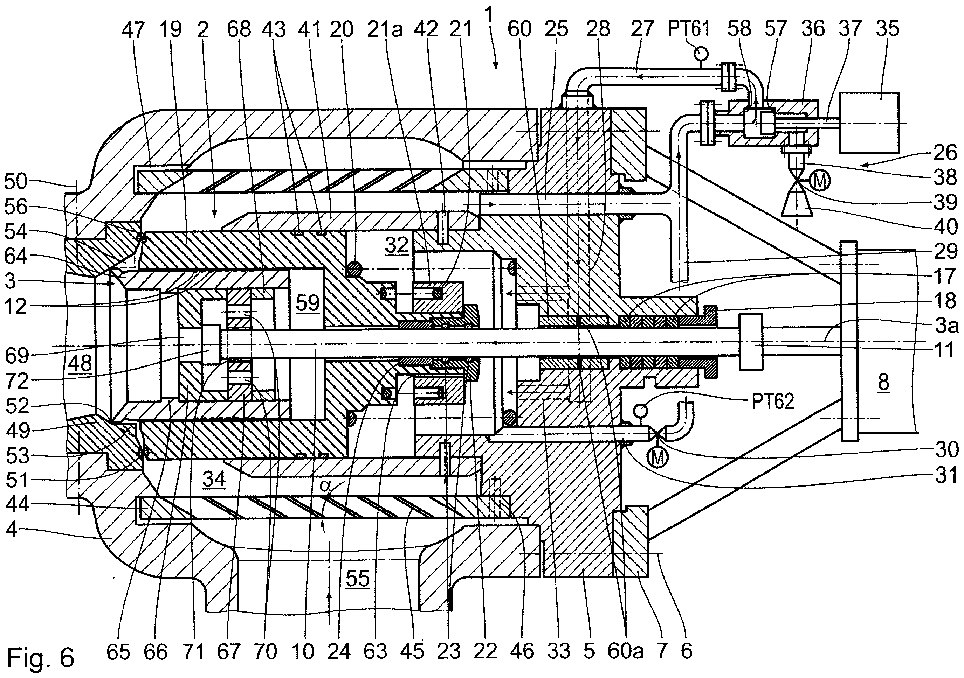

Fig. 6 zeigt eine zweite Ausführungsform des Kombinationsventils 1. Die zweite Ausführungsform unterscheidet sich im Hinblick auf die erste Ausführungsform in der Ausführung und Wirkungsweise des Regelventils 3. Alle anderen Bezugszeichen bleiben in ihrer Funktion und Position die gleichen wie im ersten Ausführungsbeispiel der Fig. 1 bis 4, mit Ausnahme der hierbei entfallenden Dichtringe 13. Auch der Regelventilantrieb 8 und der Spindelschaft 10 entsprechen in ihrer Ausführungsform im Wesentlichen dem ersten Ausführungsbeispiel.

Das Regelventil 3 ist im zweiten Ausführungsbeispiel als Vorhub-Regelventil ausgeführt. Das Regelventil 3 umfasst hierbei einen rohrförmigen Ventilkörper 64 mit einer auf der Innenseite des rohrförmigen Ventilkörpers 64 angeordneten Stufe 65, einem Schubkörper 66, einem Zugkörper 67 und einem Spanner 68. Der Schubkörper 66 weist eine zentrische Bohrung 69 auf. Der Zugkörper 67 weist Druckentlastungsbohrungen 70 auf.

Der rohrförmige Ventilkörper 64 ist auf der Innenseite des Schnellschlussventilkörpers 19 geführt. Die Dichtringe 13 entfallen, und dadurch lässt die Labyrinthdichtung 12 jetzt einen geringen Dampfstrom zu, welcher bis zum Stufenkörper 72 gelangt und dessen Funktion sicherstellt. Der Schubkörper 66 liegt im Inneren des rohrförmigen Ventilkörpers 64 an der Stufe 65 an. Am Schubkörper 66 liegt der Zugkörper 67 an. Der Spanner 68 liegt am Zugkörper 67 an und sichert die Position des Schubkörpers 66 und des Zugkörpers 67. Der Zugkörper 67 ist über eine zentrische Bohrung 71 auf dem Spindelschaft 10 geführt.

Zum Öffnen des Regelventils 3 wird der Spindelschaft 10 über den Regelventilantrieb 8 nach hinten verfahren. Der Stufenkörper 72 des Spindelschafts 10 liegt hierbei nach kurzem Verfahrweg am Zugkörper 67 an und bewegt über den Zugkörper 67 und den Spanner 68 den rohrförmigen Ventilkörper 64.

Zum Schließen des Regelventils 3 wird der Spindelschaft 10 durch den Regelventilantrieb 8 nach vorne verfahren. Der Stufenkörper 72 des Spindelschafts 10 liegt hierbei nach kurzem Verfahrweg am Schubkörper 66 an. Der Spindelschaft 10 bewegt anschließend den rohrförmigen Ventilkörper 64, durch Übertragung der Kraft über den Schubkörper 66 und die Stufe 65, nach vorne in die geschlossene Position. In der geschlossenen Position liegt der rohrförmige Ventilkörper 64 an der zweiten Dichtfläche 52 des Diffusors 49 an.

Da derartige Vorhub-Regelventile bereits seit den 1960-er Jahren existieren, die beispielsweise in Traupel, W.: "Thermische Turbomaschinen", Springer-Verlag, 1982 beschrieben und dem Fachmann bekannt sind, wird an dieser Stelle auf eine eingehende Erläuterung verzichtet wird. Damit sollte aber klar sein, dass dies auch für solche Vorhub-Regelventile gilt, welche einen anderen Aufbau haben, als das in Fig. 6 gezeigte Regelventil.

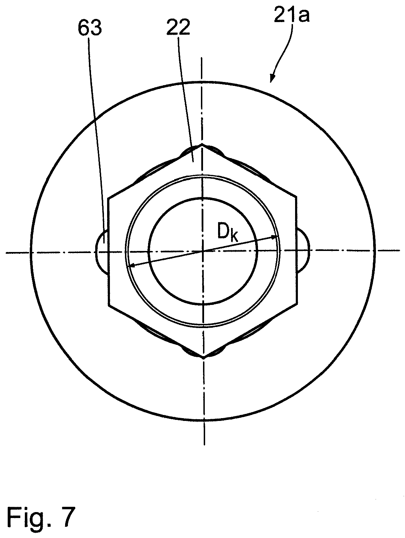

Fig. 7 zeigt eine seitliche Ansicht der Federhülse 21a und des Spanners 22. Der Spanner 22 ist an einer Stirnseite mit einem Außensechskant ausgeführt. Der Außensechskant weist einen Flankenabstand auf, welcher einer standardisierten Schlüsselweite entspricht. Die Oberfläche des Außensechskants des Spanners 22 ist gewölbt ausgeführt. Die Wölbung weist ein vorzugsweise linienförmiges Maximum im Kontaktdurchmesser Dₖ auf.

Die Federhülse 21a weist vier Axialnuten 63 auf. Die Axialnuten 63 sind gleichmäßig am Umfang der Innenbohrung der Federhülse 21a angeordnet. Der Spanner 22 ist in der Innenbohrung der Federhülse 21a angeordnet. Der Spanner 22 liegt an der Federhülse eben an.

Die Axialnuten 63 fungieren als Strömungskanäle und ermöglichen beim Öffnen und Schließen des Schnellschlussventils einen Druckausgleich. Die Ausführung des Schlüsselkopfes des Spanners 22 als Sechskant und die Anzahl der Axialnuten gewährleisten hierbei mindestens einen zumindest partiell freiliegenden Strömungskanal, bedingt durch die Geometrie des Sechskants und die um 90° zueinander versetzte Anordnung der Axialnuten 63. Druckdifferenzen, welche nicht durch einen Strömungskanal ausgeglichen werden können, könnten zu Fehlern beim Öffnen und/oder Schließen des Schnellschlussventils führen und somit die Funktion des Kombinationsventils negativ beeinflussen.

### Bezugszeichenliste

- 1: Kombinationsventil
- 2: Schnellschlussventil
- 3: Regelventil
- 3a: Längsachse
- 4: Gehäusegrundkörper
- 5: Gehäusedeckel
- 6: Schraubverbindung
- 7: Ventilaufsatz
- 8: Regelventilantrieb
- 10: Spindelschaft
- 11: Spindelkupplung
- 12: Labyrinthdichtung
- 13: Dichtring
- 14: Innenwand
- 15: Spindelschaftbohrung
- 16: Druckentlastungsbohrung
- 17: Spindeldichtung
- 18: Spanner
- 19: Schnellschlussventilkörper
- 20: zylindrische Druckfeder
- 21: zylindrische Druckfeder
- 21a: Federhülse
- 22: Spanner
- 23: Dichtring
- 24: Buchse
- 25: Frischdampfkanal
- 26: Steuerventil
- 27: Steuerleitung
- 28: Kammer
- 29: Absperrleitung
- 30: Absperrventil
- 31: Bohrung
- 32: Federraum
- 33: Bohrung
- 34: Dampfkammer
- 35: Steuerantrieb
- 36: 3/2-Wegeventil
- 37: Ventilkörper
- 38: Kanal
- 39: Absperrventil
- 40: Leckdampfleitung
- 41: Führungshülse
- 42: Stiftverbindung
- 43: Dichtring
- 44: Dampfsieb
- 45: Dampfsiebumlenkung
- 46: Stiftverbindung
- 47: Aussparung
- 48: Dampfaustrittsöffnung
- 49: Diffusor
- 50: Haltestift
- 51: erste Dichtfläche
- 52: zweite Dichtfläche
- 53: Drallbrechvorrichtung
- 54: Drallbrechzahn
- 55: Dampfeintrittsöffnung
- 56: Steuerkante
- 57: erste Endstellung
- 58: zweite Endstellung
- 59: Innenraum
- 60: Hülse
- 60a: Radialbohrung
- PT61: Druckmessung
- PT62: Druckmessung
- 63: Axialnut
- 64: rohrförmiger Ventilkörper
- 65: Stufe
- 66: Schubkörper
- 67: Zugkörper
- 68: Spanner
- 69: Bohrung
- 70: Druckentlastungsbohrung
- 71: Bohrung
- 72: Stufenkörper
- Dₖ: Kontaktdurchmesser

## Patentansprüche

1. Kombinationsventil (1) für einen Dampfkreislauf umfassend ein Schnellschlussventil (2) und ein Regelventil (3), wobei das Schnellschlussventil (2) und das Regelventil (3) in einem gemeinsamen Gehäuse (4, 5) angeordnet sind, das Regelventil (3) durch einen aktiven Antrieb (8) verlagerbar ist und das Schnellschlussventil (2) passiv durch Dampf des Dampfkreislaufs verlagerbar ist, **dadurch gekennzeichnet, dass** im laufenden Betrieb des Dampfkreislaufs am Schnellschlussventil (2) ein Teilhubtest durchführbar ist, wenn das Regelventil (3) in einer Offenstellung ist, wobei zur Durchführung des Teilhubtests das Schnellschlussventil (2) derart mit dem Dampf beaufschlagbar ist, dass es sich in eine Schließrichtung bewegt, und das Kombinationsventil so eingerichtet ist, dass sich aufgrund der Bewegung des Schnellschlussventils (2) in die Schließrichtung eine Drosselstelle öffnet, über die der Dampf entweichen kann, so dass das Schnellschlussventil (2) an einer weiteren Bewegung in die Schließrichtung gehindert ist und in einer Teilhubstellung verharrt.

2. Kombinationsventil (1) nach Anspruch 1, wobei vor und hinter der Drosselstelle jeweils ein Drucktransmitter (PT61, PT62) angeordnet ist.

3. Kombinationsventil (1) nach einem der vorhergehenden Ansprüche, wobei das Regelventil (3) als druckentlastetes Rohrregelventil ausgeführt ist.

4. Kombinationsventil (1) nach einem der vorhergehenden Ansprüche, wobei das Regelventil (3) als Vorhub-Regelventil ausgeführt ist.

5. Kombinationsventil (1) nach einem der vorhergehenden Ansprüche, wobei das Schnellschlussventil (2) mit einem hülsenförmigen Schnellschlussventilkörper (19) ausgebildet ist und das Regelventil (3) mit einem rohrförmigen Ventilkörper (64) ausgebildet ist, wobei der rohrförmige Ventilkörper (64) des Regelventils (3) auf der Innenseite des hülsenförmigen Schnellschlussventilkörpers (19) geführt ist.

6. Kombinationsventil (1) nach einem der vorhergehenden Ansprüche, wobei das Schnellschlussventil (2) und das Regelventil (3) unabhängig voneinander verfahrbar sind und das Regelventil (3) im geschlossenen Zustand eine Strömung des Dampfs durch das Kombinationsventil hindurch sperrt.

7. Kombinationsventil (1) nach einem der vorhergehenden Ansprüche, umfassend ein schaltbares Steuerventil (26) zum Schalten des Schnellschlussventils (2)

8. Kombinationsventil (1) nach Anspruch 7, wobei das Steuerventil (26) ein 3/2-Wegeventil ist und/oder einen hydraulisch oder pneumatisch ausgeführten Steuerantrieb (35) aufweist.

9. Kombinationsventil (1) nach einem der vorhergehenden Ansprüche, wobei das Regelventil (3) einen als Niederdruckhydraulik-Antrieb oder als elektrischer Antrieb ausgeführten Regelventilantrieb (8) aufweist.

10. Kombinationsventil (1) nach einem der vorhergehenden Ansprüche, wobei das Gehäuse (4, 5) aus einem Gehäusegrundkörper (4) und einem Gehäusedeckel (5) aufgebaut ist, wobei der Gehäusegrundkörper (4) mit dem Gehäusedeckel (5) kraftschlüssig und/oder formschlüssig verbindbar ist.

11. Kombinationsventil (1) nach einem der vorhergehenden Ansprüche, wobei das Gehäuse (4, 5) an einer Dampfeintrittsöffnung (55) ein Dampfsieb (44) aufweist, umfassend eine Dampfumlenkvorrichtung (45), mittels welcher der Dampf um einen Winkel von 10° bis 80°, bevorzugt von 25° bis 65°, besonders bevorzugt von 30° bis 55°, ganz besonders bevorzugt von 40° bis 50° und am bevorzugtesten von 45° umlenkbar ist, wobei vorzugsweise das Dampfsieb (44) lösbar mit einem Gehäusedeckel (5) des Gehäuses (4, 5) verbunden ist.

12. Kombinationsventil (1) nach einem der vorhergehenden Ansprüche, wobei das Gehäuse (4, 5) an einer Dampfaustrittsöffnung (48) einen Diffusor (49) aufweist, wobei vorzugsweise der Diffusor (49) lösbar in einem Gehäusegrundkörper (4) des Gehäuses (4, 5) angeordnet ist und/oder eine Drallbrechvorrichtung (53) aufweist, die vorzugsweise als eine Führung für das Regelventil (3) ausgebildet ist.

13. Kombinationsventil (1) nach einem der vorhergehenden Ansprüche, wobei im Betrieb des Kombinationsventils eine Rückseite eines Schnellschlussventilkörpers (19) des Schnellschlussventils (2) in einer Offenstellung des Schnellschlussventils (2) drucklos ist.

14. Kombinationsventil (1) nach einem der vorhergehenden Ansprüche, wobei das Regelventil (3) einen Spindelschaft (10) mit einer Spindeldichtung (17) aufweist, wobei die Spindeldichtung (17) auf einer Seite Umgebungsdruck ausgesetzt ist und auf einer gegenüberliegenden Seite im Betrieb des Kombinationsventils drucklos ist.

15. SIL 3-zertifizierter Sicherheitskreis, umfassend ein Kombinationsventil (1) nach einem der Ansprüche 1 bis 14.

## Claims

1. A combination valve (1) for a steam circuit, comprising a quick-closing valve (2) and a regulating valve (3), wherein the quick-closing valve (2) and the regulating valve (3) are arranged in a common housing (4, 5), the regulating valve (3) is displaceable by an active drive (8) and the quick-closing valve (2) is passively displaceable by steam of the steam circuit, **characterized in that** a partial-stroke test can be carried out on the quick-closing valve (2) during ongoing operation of the steam circuit if the regulating valve (3) is in an open position, wherein, in order to carry out the partial-stroke test, the quick-closing valve (2) can be acted upon by the steam in such a way that it moves in a closing direction, and the combination valve is devised such that, as a result of the movement of the quick-closing valve (2) in the closing direction, a throttle point opens via which the steam can escape, so that the quick-closing valve (2) is prevented from further movement in the closing direction and remains in a partial-stroke position.

2. The combination valve (1) according to claim 1, wherein a respective pressure transmitter (PT61, PT62) is arranged in front of and behind the throttle point.

3. The combination valve (1) according to any of the preceding claims, wherein the regulating valve (3) is configured as a pressure-relieved pipe regulating valve.

4. The combination valve (1) according to any of the preceding claims, wherein the regulating valve (3) is configured as a pre-stroke regulating valve.

5. The combination valve (1) according to any of the preceding claims, wherein the quick-closing valve (2) is configured with a sleeve-shaped quick-closing valve body (19) and the regulating valve (3) is configured with a tubular valve body (64), wherein the tubular valve body (64) of the regulating valve (3) is guided on the inside of the sleeve-shaped quick-closing valve body (19).

6. The combination valve (1) according to any of the preceding claims, wherein the quick-closing valve (2) and the regulating valve (3) are movable independently of each other, and the regulating valve (3), in the closed state, blocks a flow of the steam through the combination valve.

7. The combination valve (1) according to any of the preceding claims, comprising a switchable control valve (26) for switching the quick-closing valve (2)

8. The combination valve (1) according to claim 7, wherein the control valve (26) is a 3/2-way valve and/or has a hydraulically or pneumatically configured control drive (35).

9. The combination valve (1) according to any of the preceding claims, wherein the regulating valve (3) has a regulating valve drive (8) configured as a low-pressure hydraulic drive or as an electric drive.

10. The combination valve (1) according to any of the preceding claims, wherein the housing (4, 5) is constructed of a housing base body (4) and a housing cover (5), wherein the housing base body (4) is connectable to the housing cover (5) in a force-locking manner and/or a form-locking manner.

11. The combination valve (1) according to any of the preceding claims, wherein the housing (4, 5) has a steam strainer (44) at a steam inlet (55), comprising a steam diverter (45), by means of which the steam is divertable by an angle of 10° to 80°, preferably by 25° to 65°, particularly preferably by 30° to 55°, very particularly preferably by 40° to 50° and most preferably by 45°, wherein the steam strainer (44) is preferably detachably connected to a housing cover (5) of the housing (4, 5).

12. The combination valve (1) according to any of the preceding claims, wherein the housing (4, 5) has a diffuser (49) at a steam outlet (48), wherein the diffuser (49) is preferably detachably arranged in a housing base body (4) of the housing (4, 5) and/or has a swirl breaker device (53) which is preferably configured as a guide for the regulating valve (3).

13. The combination valve (1) according to any of the preceding claims, wherein, during operation of the combination valve, a back side of a quick-closing valve body (19) of the quick-closing valve (2) is pressureless in an open position of the quick-closing valve (2).

14. The combination valve (1) according to any of the preceding claims, wherein the regulating valve (3) has a center shaft (10) with a spindle seal (17), wherein the spindle seal (17) is exposed to ambient pressure on one side and is pressureless on an opposite side during operation of the combination valve.

15. A SIL 3-certified safety circuit, comprising a combination valve (1) according to any of claims 1 to 14.

## Revendications

1. Vanne de combinaison (1) pour un circuit de vapeur, comprenant une vanne de fermeture rapide (2) et une vanne de régulation (3), cependant que la vanne de fermeture rapide (2) et la vanne de régulation (3) sont agencées dans un boîtier commun (4, 5), la vanne de régulation (3) est déplaçable par un entraînement (8) actif et la vanne de fermeture rapide (2) est déplaçable passivement par de la vapeur du circuit de vapeur, **caractérisée en ce que**, pendant le fonctionnement du circuit de vapeur, un test de course partielle peut être réalisé à la vanne de fermeture rapide (2) quand la vanne de régulation (3) est dans une position ouverte, cependant que, pour la réalisation du test de course partielle, la vanne de fermeture rapide (2) peut être soumise de telle façon à à la vapeur qu'elle se meut en une direction de fermeture, et la vanne de combinaison est configurée de telle façon que, en raison du mouvement de la vanne de fermeture rapide (2) dans la direction de fermeture, un point d'étranglement s'ouvre, par le biais duquel la vapeur peut s'échapper, de telle sorte que la vanne de fermeture rapide (2) est empêchée de continuer à se mouvoir dans la direction de fermeture et reste dans une position de course partielle.

2. Vanne de combinaison (1) selon la revendication 1, cependant que, devant et derrière le point d'étranglement, respectivement un transmetteur de pression (PT61, PT62) est agencé.

3. Vanne de combinaison (1) selon une des revendications précédentes, cependant que la vanne de régulation (3) est confectionnée sous forme de vanne tubulaire de régulation détendue en pression.

4. Vanne de combinaison (1) selon une des revendications précédentes, cependant que la vanne de régulation (3) est confectionnée sous forme de vanne de régulation de précourse.

5. Vanne de combinaison (1) selon une des revendications précédentes, cependant que la vanne de fermeture rapide (2) est conçue avec un corps de vanne de fermeture rapide (19) en forme de douille et la vanne de régulation (3) est conçue avec un corps de vanne tubulaire (64), cependant que le corps de vanne tubulaire (64) de la vanne de régulation (3) passe à la face intérieure du corps de vanne de fermeture rapide (19) en forme de douille.

6. Vanne de combinaison (1) selon une des revendications précédentes, cependant que la vanne de fermeture rapide (2) et la vanne de régulation (3) sont manœuvrables indépendamment l'une de l'autre et la vanne de régulation (3), à l'état fermé, bloque un flux de la vapeur à travers la vanne de combinaison.

7. Vanne de combinaison (1) selon une des revendications précédentes, comprenant un vanne de commande (26) commutable pour la commutation de la vanne de fermeture rapide (2).

8. Vanne de combinaison (1) selon la revendication 7, cependant que la vanne de commande (26) est une vanne à 3/2 voies et/ou comporte un entraînement hydraulique ou pneumatique de commande (35).

9. Vanne de combinaison (1) selon une des revendications précédentes, cependant que la vanne de régulation (3) comporte un entraînement de vanne de régulation (8) conçu sous forme d'entraînement hydraulique basse-pression ou d'entraînement électrique.

10. Vanne de combinaison (1) selon une des revendications précédentes, cependant que le boîtier (4, 5) est constitué d'un corps de base de boîtier (4) et d'un couvercle de boîtier (5), cependant que le corps de base de boîtier (4) est relié au couvercle de boîtier (5) par liaison de force et/ou par liaison de forme.

11. Vanne de combinaison (1) selon une des revendications précédentes, cependant que le boîtier (4, 5) comporte à une ouverture d'entrée de vapeur (55) un tamis à vapeur (44) comprenant un dispositif de déviation de vapeur (45) au moyen duquel la vapeur peut être déviée d'un angle compris entre 10° et 80°, de préférence compris entre 25° et 65°, particulièrement de préférence compris entre 30° et 55°, tout particulièrement de préférence compris entre 40° et 50°, et de maximale préférence s'élevant à 45°, cependant que, de préférence, le tamis à vapeur (44) est relié de manière amovible à un couvercle de boîtier (5) du boîtier (4, 5).

12. Vanne de combinaison (1) selon une des revendications précédentes, cependant que le boîtier (4, 5) comporte à une ouverture de sortie de vapeur (48) un diffuseur (49), cependant que, de préférence, le diffuseur (49) est agencé de façon amovible dans un corps de base de boîtier (4) du boîtier (4, 5) et/ou comporte un dispositif de rupture de tourbillon (53) conçu de préférence sous forme d'un guide pour la vanne de régulation (3).

13. Vanne de combinaison (1) selon une des revendications précédentes, cependant que, pendant le fonctionnement de la vanne de combinaison, une face arrière d'un corps de vanne de fermeture rapide (19) de la vanne de fermeture rapide (2) est hors pression dans une position ouverte de la vanne de fermeture rapide (2).

14. Vanne de combinaison (1) selon une des revendications précédentes, cependant que la vanne de régulation (3) comporte une tige de broche (10) dotée d'un joint de tige (17), cependant que le joint de tige (17) est exposé d'un côté à une pression ambiante est est hors pression d'un côté opposé pendant le fonctionnement de la vanne de combinaison.

15. Circuit de sécurité certifié SIL3 comprenant une vanne de combinaison (1) selon une des revendications de 1 à 14.
